# EUROPEAN PATENT APPLICATION

(11) **EP 4 651 319 A1**
(43) Date of publication of application: **19.11.2025**
(21) Application number: 24175800.2
(22) Date of filing: 14.05.2024
(51) Int. Cl.: H01R 43/28, H02G 1/12

(54) **A CABLE END PREPARATION DEVICE**

(71) Applicant: NKT HV Cables AB, 371 60 Lyckeby (SE)
(72) Inventor: FROHNE, Christian, Hannover (DE); NILSSON, Jonas, Jämjö (SE); CHRONVALL, Niklas, Lyckeby (SE)
(74) Representative: Kransell & Wennborg KB

(57) **Abstract**

A cable end preparation device (10) for preparing a cable end section (2), the cable end preparation device (10) comprising a plurality of guides (14a-d) configured to contact a periphery of the cable end section (2) during operation of the end preparation device (10), and a cutter (12), the cable end preparation device (10) being configured to be operated in:
a first mode, in which the cutter (12) is fixed in relation to at least half of the guides (14c-d) during operation of the cable end preparation device (10), and
a second mode, in which the cutter (12) is allowed to move in relation to a majority of the plurality of guides (14a-d) of the plurality of guides (14a-d) during operation of the cable end preparation device (10).

## Description

### Technical field

The present disclosure relates to a cable end preparation device, and to a method for using said cable end preparation device.

### Background

Before assembling a cable accessory, such as a cable joint body or a cable termination, the end of the cable may need to be prepared. For example, there may be a need to remove a material layer, such as an outer semiconductive layer, closest to the cable end to expose an underlying layer, such as an insulation layer.

The material layer may be removed by rotating a cutting tool around the cable, to peel off a certain thickness of material from the outer surface of the cable end. In addition to reducing the diameter, deviations such as ovality and or flat parts may be removed during this operation to provide a circular cross-section. Thus, the cross-sectional geometry of the prepared section may differ from the initial cross-section geometry of the cable, especially when the initial geometry of the cable deviates from a perfect circle, which is often the case.

However, problems may occur if the transition between the initial cross-section size or geometry and the modified cross-section size or geometry is too abrupt. For example, a too steep transition may lead to a reduced contact pressure between the cable and a cable accessory, which may result in degraded electrical performance of the cable system. It is thus desired to refine and/or stretch the transition over a certain length to avoid steep slopes in the outer geometry along the transition.

While it may be possible to first peel the cable cylindrically, and to thereafter use additional tools to refine the transition, this is not advantageous since every change of tools poses a risk of damaging parts of the cable end section, such as an exposed insulation layer. There is thus a need for an improved device and method for preparing a cable end section.

### Summary

In view of the above, an object of the present disclosure is to provide a device and method for preparing a cable end which may reduce the risk of degraded electrical performance in the finished joint or termination, while minimizing the risk of damage to the cable end during the preparation.

According to a first aspect of the present disclosure, a cable end preparation device for preparing a cable end section is provided. The cable end preparation device comprises a plurality of guides configured to contact a periphery of the cable end section during operation of the cable end preparation device, and a cutter, the cable end preparation device being configured to be operated in a first mode, in which the cutter is fixed in relation to at least half of the guides being configured to contact a periphery of the cable end section during operation of the cable end preparation device during operation of the cable end preparation device, and a second mode, in which the cutter is allowed to move in relation to a majority of the plurality of guides is allowed to move in relation to a majority of the plurality of guides being configured to contact a periphery of the cable end section during operation of the cable end preparation device during operation of the cable end preparation device.

The solution builds on the realization that an improved prepared cable end section may be obtained by first removing a material layer, such as an outer semiconductive layer, along a longitudinal section of the cable end in a way which removes deviations to provide a substantially cylindrical cable end section with an almost perfectly circular cross section, and by thereafter shaping the transition from the section having the almost perfectly circular cross-section to a cable section still having the initial cross-sectional geometry of the cable.

By providing a cable end preparation device which in a first mode removes deviations in the cable geometry, and which in a second mode improves the transition between the prepared section and an unprepared section of the cable end section, the risk of degraded electrical performance in the finished joint or termination may thus be reduced.

In the first mode, in which the cutter is fixed in relation to at least half of guides being in contact with the cable end section, the cutter will regardless of the initial geometry of the cable provide a nearly cylindrical surface. This is due to the fact that the cutter will be forced to follow the circular path provided by the guides, as it is not allowed to move towards or away from the cable centerline.

In the second mode, the cutter will instead be allowed to move if encountering any irregularities in the cable surface since it is moveable to a majority of the guides being in contact with the cable surface. The cutter will thus follow the initial cross-section geometry of the cable, even if this is not a circular geometry. The second mode may thus be used to even out the transition between the prepared cylindrical section and the un-prepared section of the cable.

Furthermore, as the same device is used for the initial preparation into a cylinder as for the subsequent shaping of the transition, the risk of damaging the cable during the cable end preparation is reduced as compared to using a plurality of different tools for improving the transition. Especially since the changing between the first mode and the second mode may be performed while the cable end preparation device is still arranged on the cable end section.

According one embodiment, the cable end preparation device is configured to be rotated around the cable end section during operation of the cable end preparation device. The cable end preparation device may for example be allowed to rotate due to the construction and positioning of the guides.

Hereby, the entire cable surface may be prepared in a simple way, as the cutter will be allowed to successively peel off a material layer along the cable end section by simply applying a rotational force to the device.

According one embodiment, the cable end preparation device further comprises a frame, the frame defining a through-opening for receiving the cable end section.

The frame may provide stability to the cable preparation device and facilitate the operation. Furthermore, the through-opening of the frame may provide a device which can be easily mounted to the cable end section, as the cable end section may simply be introduced into the through-opening.

According to one embodiment, the cutter comprises a blade extending at an angle to the longitudinal axis of the through opening, and to a tangential plane of the cable surface.

According one embodiment, the frame comprises a first frame part and a second frame part forming said through-opening between them.

According one embodiment, the cutter is attached to the first frame part.

According one embodiment, the cable end preparation device comprises at least three guides attached to the frame.

According one embodiment, the cable end preparation device comprises at least four guides attached to the frame.

Hereby, the cable end section may be stably supported by the plurality of guides.

According one embodiment, each of the plurality of guides comprises at least one roller.

Hereby, the force required for moving the cable end preparation device along the cable may be reduced, as the device is allowed to roll along the cable surface. The rollers may be configured to rotate around axles being slightly angled in relation to the longitudinal axis of the through-opening. Hereby, the rollers may be configured to follow a spiral path along the cable surface, allowing the device to translate in the direction of the axis of the through opening during operation of the cable preparation device.

According one embodiment, the cable end preparation device further comprises a handle attached to the frame, the handle being configured to be gripped by an operator for rotating the cable end preparation device around the cable end section.

Hereby, the usability of the device may be improved.

According to one embodiment, the first frame part and the second frame part are spring loaded. The first and the second frame part may thus be allowed to move towards and/or away from each other to a certain degree during operation of the tool. Hereby, the positions of the guides arranged on the frame parts may be allowed to better follow the cable surface, such that the device may be sufficiently supported by the cable during operation.

According to one embodiment, the cutter may be arranged at the same axial position as one of the guides. Alternatively, the cutter may be attached to one of the guides. For example, the guide and the cutter may thus, in the second mode, both be moveable in relation to a majority of the plurality of guides. For example, the cutter and the guide may be attached to the frame by a common spring.

According one embodiment, the cable end preparation device is configured to prepare a semiconductive layer of the cable end section.

The device may thus be used to remove a section or the entire thickness of the outer semiconductive layer to expose an insulation layer, and to refine the transition between the exposed insulation and the remaining semiconductive layer.

According to a second aspect of the present disclosure, a method for preparing a cable section using a cable end preparation device according to the first aspect is provided, the method including arranging the cable end preparation device on the cable end section, operating the cable end preparation device in the first mode, changing the cable end preparation device into the second mode while the cable end preparation device is attached to the cable end section, and operating the cable end preparation device in the second mode.

A cable end preparation method is thus provided which may prepare a cable end having a smooth transition between a prepared cylindrical cable end section and a section of the cable having an original, typically not perfectly cylindrical cross-section, without having to remove the cable end preparation device from the cable to use a different tool.

Hereby, the risk of damaging the cable during the cable end preparation is reduced compared to using a plurality of different tools, as the device is still arranged on the cable when changing between the different modes.

### Brief Description of the Drawings

These and other aspects of the present inventive concept will now be described in more detail, with reference to the appended drawings showing an example embodiment of the inventive concept, wherein:
Fig. 1 schematically illustrates a cable end preparation device according to an embodiment of the present disclosure in a first mode.
Fig. 2 schematically illustrates a cable end preparation device according to an embodiment of the present disclosure in a second mode.
Fig. 3 is a method for preparing a cable end section according to an embodiment of the present disclosure.

### Detailed Description of Example Embodiments

In the present detailed description, various embodiments are described.

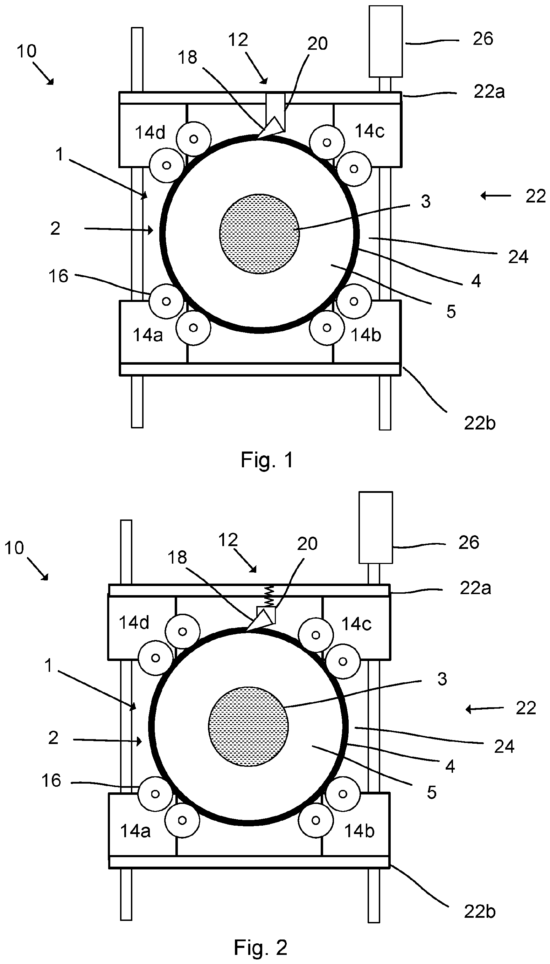

Fig. 1 schematically illustrates a cable end preparation device 10 according to an embodiment of the present disclosure. The cable end preparation device 10 is illustrated when mounted around and in operation on an end section 2 of a cable 1. The cable 1 may be a power cable. The cable end section 2 is a section of the cable 1 which extends from a cut off end face of the cable 1, and onto which an accessory, such as a termination or joint body, is to be mounted. The cable end section 2 may extend a certain length from the cut cable end, the length depending on the size and type of the accessory for which the cable end section is to be prepared.

The cable 1 comprises a conductor 3, an insulation layer 5 arranged around the conductor 3, and a semiconductive layer 4 arranged around the insulation layer 5. The cable 1 may also comprise additional layers, such as additional semiconductive layers. During operation, the cable preparation device 10 is rotated around the periphery of the cable 1, while successively being translated along the cable end section 2 to remove part of an outer material layer, such as the outer semiconductive layer 4.

The cable end preparation device 10 may comprise a frame 22. The frame 22 defines a through-opening 24 for receiving the cable end section 2. The cable end preparation device 10 it thus mounted on the cable end section 2 by pushing the cable preparation device 10 onto the cable end section 2, such that the cable end section 2 is received by the through-opening 24 of the frame 22.

The frame 22 may comprise a first frame part 22a and a second frame part 22b. The size of the through-opening 24 may be adjusted by moving the first frame part 22a and/or the second frame part 22b towards or away from each other, which may facilitate the mounting of the cable preparation device 10 on the cable 1. The first and/or second frame parts 22a, 22b may further be spring loaded.

The cable end preparation device 10 comprises a cutter 12. The cutter 12 may comprise a blade 18, the blade 18 being configured to contact the periphery of the cable end section 2 during operation, to remove an outer material layer. The cutter may further comprise a blade holder 20 arranged to attach the cutter 12 to the cable end preparation device 10, such as to the frame 22. In Fig.1, the cutter 12 is attached to the first frame part 22a.

The cable end preparation device 10 further comprises a plurality of guides 14a-d. For example, the cable preparation device 10 may comprise four guides 14a-d, as illustrated in Fig.1. It is understood that other numbers of guides 14a-d, such as three or six guides may also be used. In Fig.1, each of the guides 14a-d are attached to either the first frame part 22a or the second frame part 22b. The guides 14a-d are configured to contact the periphery of the cable 1 during operation of the cable end preparation device 1, allowing the blade 18 to successively peel off the outer material layer of the cable. By distributing the guides 14a-d around the through-opening 24, the cable end section 2 may be secured in the through-opening 24 by the guides 14a-d during operation of the device.

Furthermore, the guides 14a-d may be configured to translate the cable peeling device 10 longitudinally along the cable 1 during the peeling, for example by mounting the guides 14a-d at an angle to a longitudinal axis defined by the through-opening 24.

Each of the plurality of guides 14a-d may comprise at least one roller 16, such as a plurality of rollers 16. For example, each guide 14a-d may comprise four rollers 16, two of which are hidden in Fig.1, behind the pair of rollers 16 shown, as they are arranged at the same circumferential position, but axially displaced. In other embodiments, the guides 14a-d could comprise other means for guiding the cable preparation device 10 along the cable end section, such as means for allowing the cable end preparation device 10 to slide along the cable surface.

The cable end preparation device 10 is in Fig.1 configured to be operated in a first mode. In the first mode, the cutter 12 is arranged to be fixed in relation to at least half of the guides 14a-d being in contact with the cable end surface during operation of the cable end preparation device 10 in the first mode. It should be understood that further guides 14, such as guides which are only activated during the second mode, may be arranged on the device 10, but that the cutter is only arranged to be fixed in relation to half of the guides 14a-d which are configured to contact the cable during the operation in the first mode. Or, in other words, in relation to the guides being "active" in the first mode. In Fig.1, the cutter 12 is at least fixed in relation to the guides 14c-d arranged on the first frame part 22a, that is, the same frame part as the cutter 12. Thus, in the first mode, when the cable preparation device 10 is rotated around the cable 1, the cutter 12 will follow an approximate circle around the cable 1, evening out any deviations, such that a substantially circular cross-section geometry may be obtained.

Fig.2 illustrates the cable end preparation device 10 in a second mode. In the second mode illustrated in Fig.2, the cutter 12 is arranged such that it is allowed to move in relation to a majority of the plurality of guides 14a-d during operation of the cable end preparation device 10. In Fig.2, the cutter is illustrated as being moveable in relation to all guides 14a-d. However, it is enough that the cutter 12 is moveable in relation to a majority of the guides 14a-d being configured to contact the cable in the second mode, to achieve the purpose. It should be understood that further guides 14 may be arranged on the device 10, such as guides being activated only during the first mode, and that the cutter in the second mode is arranged to be moveable in relation to a majority of the guides 14a-d which are configured to contact the cable during the operation of the device in the second mode. That is, in relation to the guides being "active" in the second mode. Thus, in the second mode, the blade 18 follows the curvature of the cable surface, rather than being forced to follow a perfect circle, which may be used to even out the transition between the cable end section having been prepared to have a circular cross section by the cable preparation device 10 being in the first mode, and the section of the cable 1 which has not been prepared, and which does typically not have a perfectly circular cross section.

In the embodiment illustrated in Fig.2, this is achieved by arranging the cutter 12 movably to the first frame part 22a, such as by attaching it by a coil spring, such that it is allows to move in a direction parallel to a straight line between the first and second frame parts 22a, 22b. A switch from the first mode to the second mode may thus include replacing the fixed mounting means of the cutter 12 used in the first mode, by a resilient mounting means. The switch may alternatively include replacing the blade holder 20 or the entire cutter 12. Alternatively, the same mounting means and cutter 12 may be used in both modes, but the ability of the cutter 12 to move may be blocked in the first mode by a locking mechanism, such as by introducing a locking pin.

It is not required that the cutter 12 is moveable in relation to all of the guides to achieve the desired effect. In some examples, other parts of the device 10, such as parts of the frame 22 or one or more of the guides 14a-d may be selectively moveable or spring-loaded to allow movement of the cutter 12 in relation to a majority of the guides 14a-d during operation in the second mode.

Furthermore, in some embodiments, the cutter 12 may be allowed to move together with one of the guides 14. For example, an additional guide 14 could be attached to, or at, the cutter 12. The additional guide 14 would thus be allowed follow the movement of the cutter 12 along the cable surface.

The number of guides 14a-d contacting the cable may differ between the first and second mode. For example, a fewer number of guides 14a-c may be allowed to contact the cable surface in the second mode than in the first mode.

It is understood that all of the proposed ways of switching between the first and second modes, may be performed without removing the cable end preparation device 10 from the cable end section 2. The risk of damaging the cable 1 may thus be reduced as compared to switching between different tools.

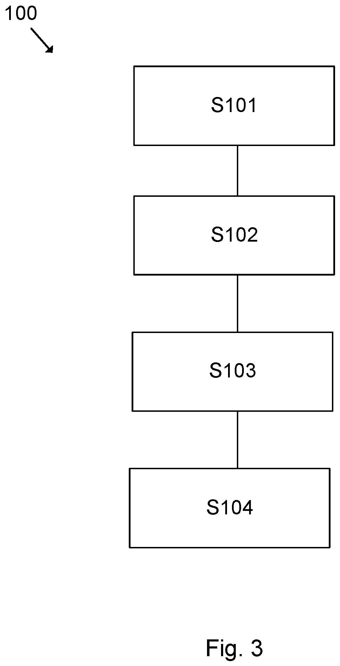

Fig. 3 illustrates a method 100 for preparing a cable end section 2 using the cable end preparation device 10.

In a first step, S101, the cable end preparation device 10 is arranged on the cable end section 2. This may be achieved by introducing the cable end section into the through-opening 24 between the first frame part 22a and the second frame part 22b of the frame 22.

In a second step, 102, the cable end preparation device 10 is operated in the first mode. As the cable end preparation device 10 is operated by rotationally moving it along the cable end section in the first mode, a substantially cylindrical cross-section is obtained due to the cutter 12 being fixed in relation to at least half of the guides 14.

In a third step, 103, the cable end preparation device 10 is changed into the second mode while the cable end preparation device 10 is still arranged on the cable end section 2. Thus, when a certain length of the cable end section 2 has been prepared, the cable end preparation device is changed into the second mode by allowing movement of the cutter 12 in relation to at least one of the guides.

In a fourth step, 104, the cable end preparation device 10 is operated in the second mode. In the second mode, the cable preparation device 10 is typically only operated over the transition between the section being prepared to have a circular cross section without deviations and the section of the cable still having the initial cable cross-section. Furthermore, in the second mode, the distance of the cutter 12 to a centerline of the cable is increased little by little to provide a sloping transition.

Even though the solution has been described with reference to specific exemplifying embodiments thereof, many different alterations, modifications and the like will become apparent for those skilled in the art.

Additionally, variations to the disclosed embodiments can be understood and effected by the skilled person, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A cable end preparation device (10) for preparing a cable end section (2), the cable end preparation device (10) comprising a plurality of guides (14a-d) configured to contact a periphery of the cable end section (2) during operation of the end preparation device (10), and a cutter (12), the cable end preparation device (10) being configured to be operated in:
a first mode, in which the cutter (12) is fixed in relation to at least half of the guides (14a-d) being configured to contact a periphery of the cable end section (2) during operation of the cable end preparation device (10), and
a second mode, in which the cutter (12) is allowed to move in relation to a majority of the plurality of guides (14a-d) being configured to contact a periphery of the cable end section (2) during operation of the cable end preparation device (10).

2. The cable end preparation device (10) according to any of claim 1, wherein the cable end preparation device (10) is configured to be rotated around the cable end section (2) during operation of the cable end preparation device (10).

3. The cable end preparation device (10) according to any of claims 1-2, wherein the cable end preparation device (10) further comprises a frame (22), the frame (22) defining a through-opening (24) for receiving the cable end section (2).

4. The cable end preparation device (10) according to claim 3, wherein the frame (22) comprises a first frame part (22a) and a second frame part (22b) forming said through-opening (24) between them.

5. The cable end preparation device (10) according to claim 4, wherein the cutter (12) is attached to the first frame part (12a).

6. The cable end preparation device (10) according to any of claims 1-5, wherein the cable end preparation device (10) comprises at least three guides (14).

7. The cable end preparation device (10) according to any of claims 1-6, wherein the cable end preparation device (10) comprises at least four guides (14a-d).

8. The cable end preparation device (10) according to claim 7, wherein all of the plurality of guides (14a-d) are allowed to contact the periphery of the cable end section (2) in the first mode.

9. The cable end preparation device (10) according to any of claims 1-8, wherein each of the plurality of guides (14a-d) comprises at least one roller (16).

10. The cable end preparation device (10) according to any of claims 3-9 further comprising a handle (26) attached to the frame (22), the handle (26) being configured to be gripped by an operator for rotating the cable end preparation device (10) around the cable end section (2).

11. The cable end preparation device (10) according to any of claims 1-10, wherein the cable end preparation device (10) is configured to prepare a semiconductive layer (4) of the cable end section (2).

12. A method (100) for preparation of a cable end section (2) using a cable end preparation device (10) according any of claims 1-10, the method (100) including:
arranging (S101) the cable end preparation device (10) on the cable end section (2),
operating (S102) the cable end preparation device (10) in the first mode, in which the cutter (12) is fixed in relation to at least half of the guides (14c-d) being configured to contact a periphery of the cable end section (2) during operation of the cable end preparation device (10),
changing (S103) the cable end preparation device (10) into the second mode, in which the cutter (12) is allowed to move in relation to a majority of the plurality of guides (14a-d) being configured to contact a periphery of the cable end section (2) during operation of the cable end preparation device (10), while the cable end preparation device (10) is still arranged on the cable end section (2), and
operating (S104) the cable end preparation device (10) in the second mode.
